(19) Europäisches Patentamt
European Patent Office
Office européen des brevets

(11) EP 0 485 822 B1

(12) **EUROPÄISCHE PATENTSCHRIFT**

(45) Veröffentlichungstag und Bekanntmachung des Hinweises auf die Patenterteilung:
**03.07.1996 Patentblatt 1996/27**

(51) Int Cl.$^6$: **C08F 4/602**, C08F 10/00

(21) Anmeldenummer: **91118681.5**

(22) Anmeldetag: **01.11.1991**

(54) **Verfahren zur Herstellung eines hochmolekularen Olefinpolymers**

Process for preparing high molecular weight polyolefines

Procédé de préparation d'un polymère oléfinique à haut poids moléculaire

(84) Benannte Vertragsstaaten:
**BE DE ES FR GB IT NL**

(30) Priorität: **12.11.1990 DE 4035886**

(43) Veröffentlichungstag der Anmeldung:
**20.05.1992 Patentblatt 1992/21**

(73) Patentinhaber: **HOECHST AKTIENGESELLSCHAFT**
**D-65926 Frankfurt am Main (DE)**

(72) Erfinder:
- **Winter, Andreas, Dr.**
  **W-6246 Glashütten/Taunus (DE)**
- **Antberg, Martin, Dr.**
  **W-6238 Hofheim am Taunus (DE)**
- **Spaleck, Walter, Dr.**
  **W-6237 Liederbach (DE)**
- **Rohrmann, Jürgen, Dr.**
  **W-6233 Kelkheim (Taunus) (DE)**
- **Dolle, Volker, Dr.**
  **W-6233 Kelkheim (Taunus) (DE)**

(56) Entgegenhaltungen:
**EP-A- 0 384 264**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf ein Verfahren zur Herstellung von Olefinpolymeren mit hoher Isotaktizität, enger Molmassenverteilung und hoher Molmasse.

Polyolefine mit hoher Molmasse besitzen insbesondere Bedeutung für die Herstellung von Folien, Platten oder Großhohlkörpern wie z.B. Rohre oder Formteile.

Aus der Literatur sind lösliche Metallocenverbindungen auf Basis von Bis(cyclopentadienyl)zirkon-alkyl bzw. -halogenid in Kombination mit oligomeren Aluminoxanen bekannt. Mit diesen Systemen können Ethylen und Propylen mit mäßiger Aktivität polymerisiert werden, man erhält jedoch kein isotaktisches Polypropylen.

Weiterhin ist von dem Katalysatorsystem Bis(cyclopentadienyl)titandiphenyl/Methylaluminoxan bekannt, daß es Propylen in Stereoblockpolymere, d.h. Polypropylen mit mehr oder weniger langen isotaktischen Sequenzen, umzuwandeln vermag (vgl. US-PS 4,522,982). Deutliche Nachteile dieses Katalysatorsystems sind die großtechnisch irrelevanten Polymerisationstemperaturen (0 °C bis -60 °C) und die völlig unbefriedigenden Katalysatoraktivitäten.

Die Herstellung von isotaktischem Polypropylen gelingt mit Hilfe des Ethylen-bis(4,5,6,7-tetrahydro-1-indenyl)zirkondichlorids zusammen mit einem Aluminoxan in einer Suspensionspolymerisation (vgl. EP-A 185 918). Das Polymer besitzt eine enge Molmassenverteilung, was für bestimmte Anwendungen, beispielsweise für den Hochleistungsspritzguß, von Vorteil ist.

Gleichzeitig besitzt das Katalysatorsystem eine Reihe von Mängeln.

Die Polymerisation wird in Toluol durchgeführt, welches sehr aufwendig gereinigt und von Feuchtigkeit und Sauerstoff befreit werden muß. Außerdem ist die Schüttdichte des Polymers zu gering, die Kornmorphologie und die Korngrößenverteilung unbefriedigend. Besonderer Nachteil des bekannten Verfahrens ist jedoch, daß bei technisch interessanten Polymerisationstemperaturen nur Polymere mit unakzeptabel niedriger Molmasse hergestellt werden können.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE-A-37 26 067). Die Voraktivierung erhöht zwar die Molmasse, jedoch ist keine wesentliche Steigerung erreichbar.

Eine weitere, aber noch nicht ausreichende, Steigerung der Molmasse konnte durch Verwendung speziell heteroatomverbrückter Metallocene bei hoher Metallocenaktivität realisiert werden (EP-A 0 336 128).

Weiterhin sind Katalysatoren auf Basis Ethylenbisindenylhafniumdichlorid und Ethylen-bis(4,5,6,7 - tetrahydro-1-indenyl)hafniumdichlorid und Methylaluminoxan bekannt, mit denen durch Suspensionspolymerisation höhermolekulare Polypropylene hergestellt werden können (vgl. J. A. Ewen et al., J. Am.Chem.Soc. 109 (1987) 6544). Unter technisch relevanten Polymerisationsbedingungen ist jedoch die Kornmorphologie der derart erzeugten Polymeren nicht befriedigend und die Aktivität der eingesetzten Katalysatoren vergleichsweise gering. Verbunden mit den hohen Katalysatorkosten ist somit mit diesen Systemen eine kostengünstige Polymerisation nicht möglich.

Es bestand die Aufgabe, einen Katalysator zu finden, der Polymere mit guter Kornmorphologie und hoher Molmasse in großer Ausbeute erzeugt.

Es wurde gefunden, daß unter Verwendung von in der Ligandsphäre in bestimmter Weise substituierten, verbrückten Metallocensystemen diese Aufgabe gelöst werden kann.

Die Erfindung betrifft somit ein Verfahren zur Herstellung eines Olefinpolymers durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallverbindung und einem Aluminoxan bevorzugt der Formel (II)

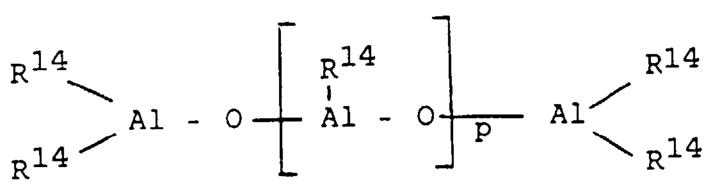

(II)

für den linearen Typ und/oder der Formel III

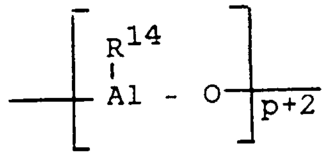

(III)

für den cyclischen Typ,

wobei in den Formeln (II) und (III) die Reste $R^{14}$ gleich oder verschieden sein können und eine $C_1$-$C_6$-Alkylgruppe, eine $C_6$-$C_{18}$-Arylgruppe oder Wasserstoff bedeuten und p eine ganze Zahl von 2 bis 50 bedeutet, und/oder einer salzartigen Verbindung der Formel $R_xNH_{4-x}BR'_4$ oder der Formel $R_3PHBR'_4$, worin x=1,2 oder 3 ist, R = Alkyl oder Aryl gleich oder verschieden sind und R' = Aryl sind, das auch fluoriert oder teilfluoriert sein kann, besteht, dadurch gekennzeichnet, daß das Metallocen eine Verbindung der Formel I ist,

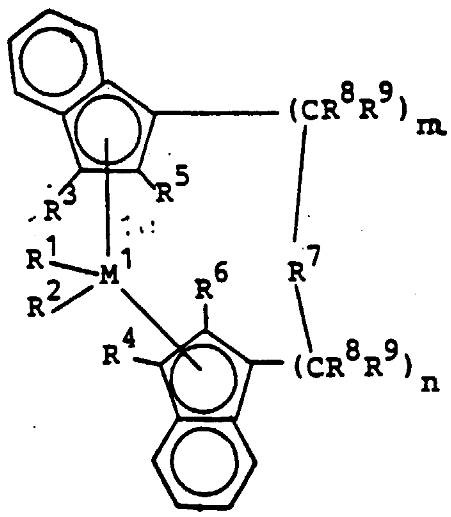

(I)

worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{10}$, $-SR^{10}$, $-OSiR_3^{10}$, $SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist,

$R^5$ und $R^6$ gleich oder verschieden sind und die für $R^3$ und $R^4$ genannte Bedeutung haben, mit der Maßgabe, daß $R^5$ und $R^6$ nicht Wasserstoff sind,

$R^7$

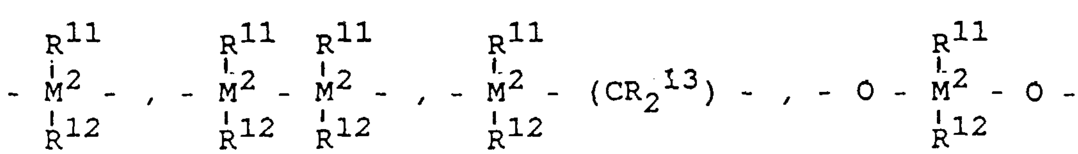

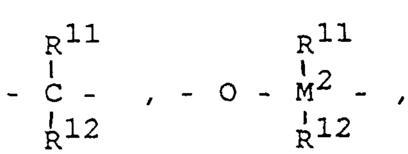

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben und m und n gleich oder verschieden sind und null, 1 oder 2 sind, wobei m plus n null, 1 oder 2 ist.
Alkyl steht für geradkettiges oder verzweigtes Alkyl. Halogen (halogeniert) bedeutet Fluor, Chlor, Brom oder Jod, bevorzugt Fluor oder Chlor.

Der für das erfindungsgemäße Verfahren zu verwendende Katalysator besteht aus einem Aluminoxan und/oder einer salzartigen Verbindung der Formel $R_xNH_{4-x}BR'_4$ oder der Formel $R_3PHBR'_4$, worin x = 1,2 oder 3 ist, R = Alkyl oder Aryl gleich oder verschieden sind und R' = Aryl sind, das auch fluoriert oder teilfluoriert sein kann und einem Metallocen der Formel I

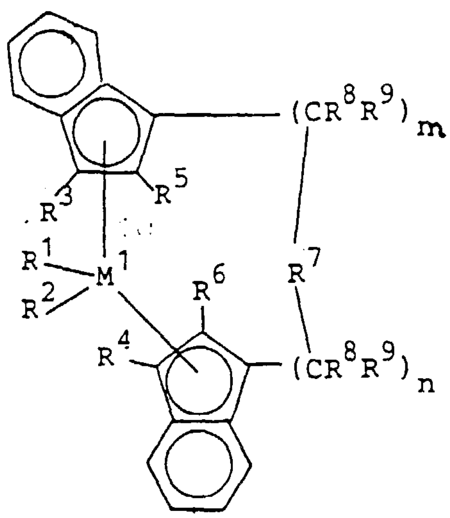

(I)

In Formel I ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

$R^1$ und $R^2$ sind gleich oder verschieden sund bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$- , vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich oder verschieden und bedeuten ein Wasserstoffatom, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, einen $-NR_2^{10}$, $-SR^{10}$, $-OSiR_3^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist. Besonders bevorzugt sind $R^3$ und $R^4$ Wasserstoff.

$R^5$ und $R^6$ sind gleich oder verschieden, bevorzugt gleich, und haben die für $R^3$ und $R^4$ beschriebene Bedeutung, mit der Maßgabe, daß $R^5$ und $R^6$ nicht Wasserstoff sein dürfen. Bevorzugt sind $R^5$ und $R^6$ ($C_1$-$C_4$)-Alkyl, das halogeniert sein kann, wie Methyl, Ethyl, Propyl, Isopropyl, Butyl, Isobutyl oder Trifluormethyl, insbesondere Methyl.

$R^7$ ist

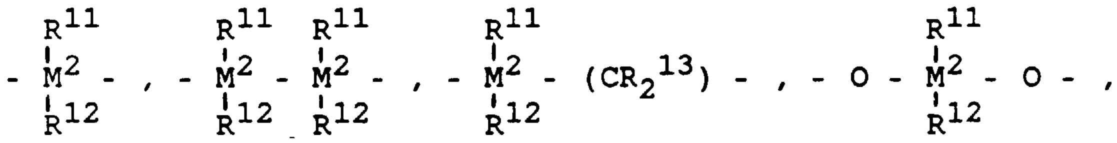

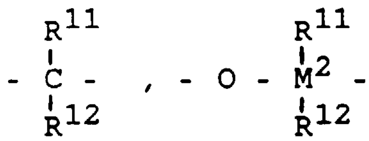

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{10}$-, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^2$ ist Silizium, Germanium oder Zinn, bevorzugt Silizium und Germanium.

$R^7$ ist vorzugsweise $=CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Somit sind die besonders bevorzugten Metallocene die Verbindungen der Formeln A, B und C

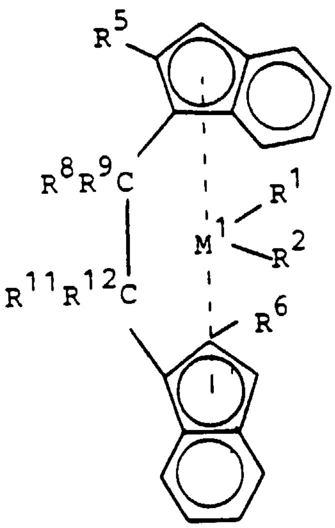

(A),

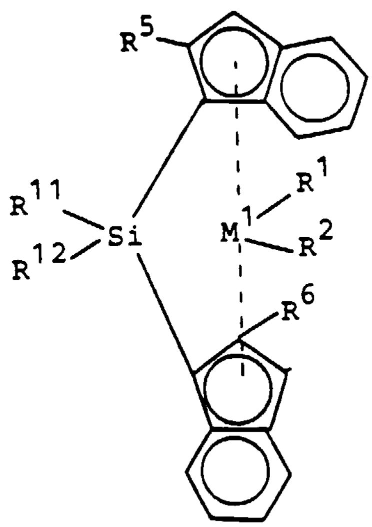

(B),

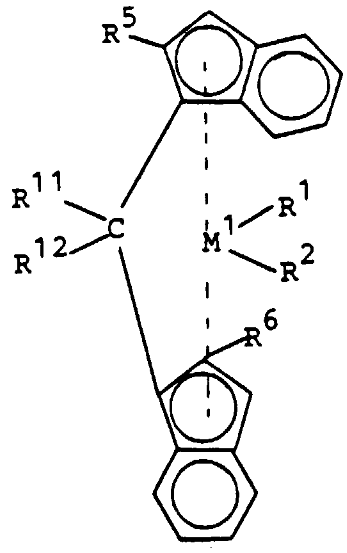

(C),

mit

$M^1$ = Zr, Hf; $R^1$, $R^2$ = Methyl, Chlor; $R^5$, $R^6$ = Methyl, Ethyl, Trifluormethyl und $R^8$, $R^9$, $R^{11}$ und $R^{12}$ mit den obengenannten Bedeutungen, insbesondere die in den Ausführungsbeispielen aufgeführten Verbindungen I.

Die chiralen Metallocene werden als Racemat zur Herstellung von hochisotaktischen Poly-1-olefinen eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Die vorstehend beschriebenen Metallocene können nach folgendem Reaktionsschema hergestellt werden:

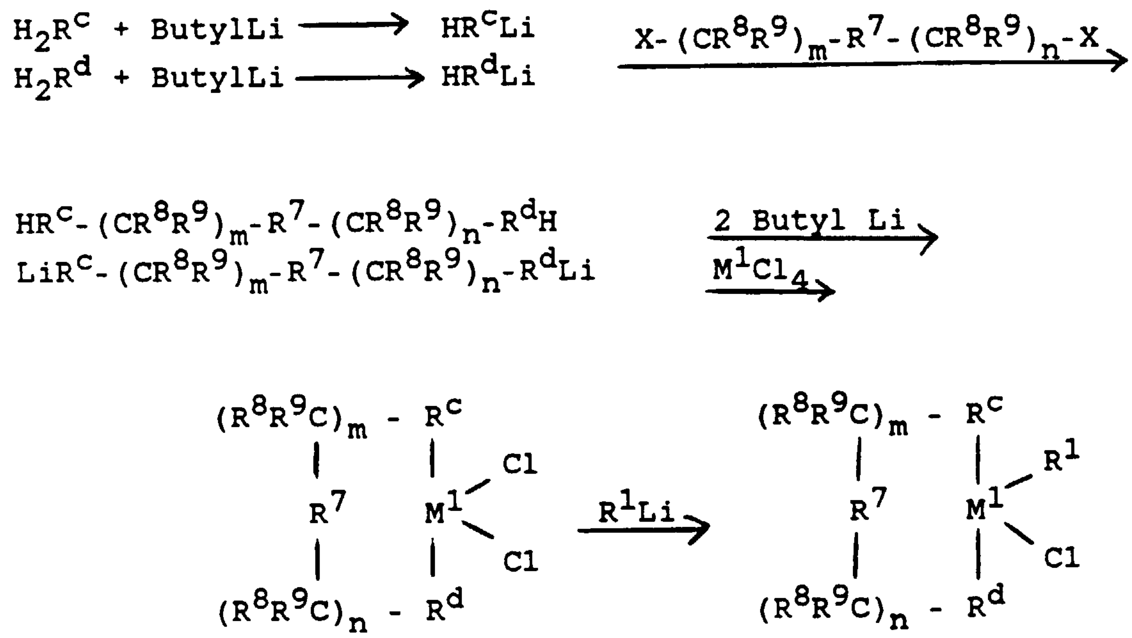

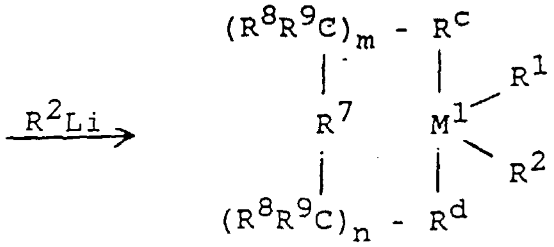


X = Cl, Br, I, O-Tosyl;

$H_2R^c$ =

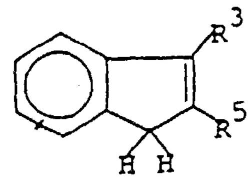

$H_2R^d$ =

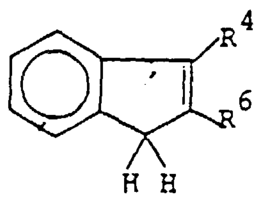

Die Herstellungsverfahren sind literaturbekannt; vgl. Journal of Organometallic Chem. 288 (1985) 63-67, EP-A 320 762 und die Ausführungsbeispiele.

Erfindungsgemäß wird als Cokatalysator ein Aluminoxan, bevorzugt der Formel (II)

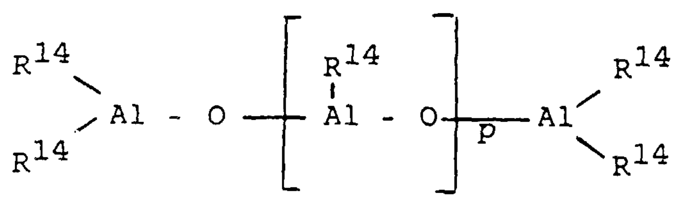

(II)

für den linearen Typ und/oder der Formel (III)

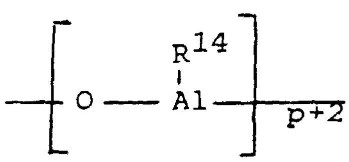

(III)

für den cyclischen Typ verwendet, wobei in den Formeln (II) und (III) die Reste $R^{14}$ gleich oder verschieden sein können und eine $C_1$-$C_6$-Alkylgruppe, eine $C_6$-$C_{18}$-Arylgruppe oder Wasserstoff bedeuten, und p eine ganze Zahl von 2 bis 50, bevorzugt 10 bis 35 bedeutet.

Bevorzugt sind die Reste $R^{14}$ gleich und bedeuten Methyl, Isobutyl, Phenyl oder Benzyl, besonders bevorzugt Methyl.

Sind die Reste $R^{14}$ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste $R^{14}$) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{14}$ werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004 und die Herstellungsbeispiele C und F).

Zur Entfernung von im Olefin vorhandener Katalysatorgifte ist eine Reinigung mit einem Aluminiumalkyl, beispielsweise $AlMe_3$ oder $AlEt_3$ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von 0 bis 150 °C, vorzugsweise 30 bis 80 °C, durchgeführt. Polymerisiert oder copolymerisiert werden Olefine der Formel $R^a$-CH=CH-$R^b$. In dieser Formel sind $R^a$ und $R^b$ gleich oder verschieden und bedeuten ein Wasserstoffatom oder einen Alkylrest mit 1 bis 14 C-Atomen. $R^a$ und $R^b$ können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler wird, falls erforderlich, Wassertoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen Metallocene im technisch interessanten Temperaturbereich zwischen 30 und 80 °C Polymere mit hoher Molmasse, hoher Stereospezifität und guter Kornmorphologie erzeugen.

Insbesondere die erfingungsgemäßen Zirkonocene stoßen in einem Molmassenbereich vor, der beim bisherigen Stand der Technik den Hafnocenen vorbehalten war. Diese hatten jedoch den Nachteil nur geringer Polymerisationsaktivität und sehr hoher Katalysatorkosten und die damit hergestellten Polymeren wiesen eine schlechte Pulvermorphologie auf.

Die nachfolgenden Beispiele sollen die Erfindung näher erläutern.

Es bedeuten:

VZ = Viskositätszahl in $cm^3/g$

$M_w$ = Molmassengewichtsmittel in g/mol ⎤ ermittelt durch Gelpermeations-chromatographie

$M_w/M_n$ = Molmassendispersität ⎦

Schmp.= Schmelzpunkt ermittelt mit DSC (20°C/min Aufheiz-/Abkühlgeschwindigkeit)

II = Isotaktischer Index (II = mm+1/2 mr) ermittelt durch $^{13}$C-NMR-Spektroskopie

SD = Polymerschüttdichte in $g/dm^3$

MFI/(230/5) = Schmelzindex, gemessen nach DIN 53735; in g/10 min

Synthese der in den Beispielen verwendeten Metallocene:

Ausgangssubstanzen:

Die Herstellung der als Ausgangsverbindungen dienenden Indenyle $H_2R^c$ bzw. $H_2R^d$ erfolgt gemäß oder analog zu: J. Org. Chem., 49 (1984) 4226-4237, J. Chem. Soc., Perkin II, 1981, 403-408, J. Am. Chem. Soc., 106 (1984) 6702, J. Am. Chem. Soc., 65 (1943) 567, J. Med. Chem., 30 (1987) 1303-1308, Chem. Ber. 85 (1952) 78-85.

Die Herstellung der Chelatliganden $LiR^c$-$(CR^8R^9)_m$-$R^7$-$(CR^8R^9)_n$-$R^dLi$ ist prinzipiell beschrieben in: Bull. Soc. Chim., 1967, 2954, J. Am. Chem. Soc., 112 (1990) 2030-2031, ibid. 110 (1988) 6255-6256, ibid. 109 (1987), 6544-6545, J. Organomet. chem., 322 (1987) 65-70, New. J. Chem. 14 (1990) 499-503.

I) Synthese von 2-Me-Inden

110,45 g (0,836 mol) 2-Indanon wurden in 500 $cm^3$ Diethylether gelöst und 290 $cm^3$ 3 n (0,87 mol) etherische Methylgrignardlösung so zugetropft, daß leicht refluxierte. Nach 2 h Kochen unter leichtem Rückfluß wurde auf eine Eis/Salzsäure-Mischung gegeben und mit Ammoniumchlorid ein pH von 2-3 eingestellt. Die organische Phase wurde abgetrennt und mit $NaHCO_3$ und Kochsalzlösung gewaschen und getrocknet. Es wurden 98 g Rohprodukt (2-Hydroxy-2-methyl-indan) erhalten, welches nicht weiter gereinigt wurde.

In 500 $cm^3$ Toluol wurde dieses Produkt gelöst, mit 3 g p-Toluolsulfonsäure am Wasserabscheider bis zur Beendigung der Wasserabspaltung erhitzt, eingeengt, in Dichlormethan aufgenommen und über Silicagel filtriert und im Vakuum destilliert (80°C/10 mbar).

Ausbeute: 28,49 g (0,22 mol-26 %).

Die Synthese dieser Verbindung ist auch beschrieben in: C.F. Koelsch, P.R. Johnson, J. Am. Chem. Soc., 65 (1943) 567-573

II) Synthese von $(2\text{-Me-Inden})_2SiMe_2$

13 g (100 mol) 2-Me-Inden wurde in 400 $cm^3$ Diethylether gelöst und 62,5 $cm^3$ 1,6 n (100 mmol) n-Butyllithium-n-Hexan-Lösung innerhalb 1 h unter Eiskühlung zugetropft und dann 1 h bei ~35°C nachgerührt.

6,1 $cm^3$ (50 mmol) Dimethyldichlorsilan wurden in 50 $cm^3$ $Et_2O$ vorgelegt und bei 0°C die Lithiosalzlösung innerhalb von 5 h zugetropft, über Nacht bei Raumtemperatur gerührt und über das Wochenende stehen gelassen.

Vom abgesetzten Feststoff wurde abfiltriert und zur Trockne eingedampft. Nach Extraktion mit kleinen Portionen n-Hexan wurde filtriert und eingeengt. Es fielen 5,7 g (18,00 mmol) eines weißen Kristallisats an. Die Mutterlauge wurde eingeengt und dann säulenchromatographisch (n-Hexan/$H_2CCl_2$ 9:1 vol.) gereinigt, wobei nochmals 2,5 g (7,9 mmol - 52 %) Produkt (als Isomerengemisch) anfielen.

$r_F$ ($SiO_2$; n-Hexan/$H_2CCl_2$ 9:1 vol.) = 0,37

Das 1-H-NMR-Spektrum zeigt die für ein Isomerengemisch zu erwartenden Signale in Verschiebung und Integrationsverhältnis.

III) Synthese von $(2\text{-Me-Ind})_2CH_2CH_2$

3 g (23 mmol) 2-Me-Inden wurden in 50 $cm^3$ THF gelöst und 14,4 $cm^3$ 1,6 n (23,04 mmol) n-Butyllithium-n-Hexan-Lösung zugetropft und dann 1 h bei 65°C gerührt. Danach wurde 1 ml (11,5 mmol) 1,2-Dibromethan bei -78°C zugegeben, auf Raumtemperatur erwärmen lassen und 5 h gerührt. Nach Eindampfen wurde säulenchromatographisch gereinigt ($SiO_2$; n-Hexan/$H_2CCl_2$ 9:1 vol.).

Die produkthaltigen Fraktionen wurden vereinigt, eingedampft und in trockenem Ether aufgenommen, über $MgSO_4$ getrocknet, filtriert und das Lösemittel abgezogen.

Ausbeute: 1,6 g (5,59 mmol - 49 %) an Isomerengemisch

$r_F$ ($SiO_2$; n-Hexan/$H_2CCl_2$ 9:1 vol.) = 0,46

Das 1-H-NMR-Spektrum entspricht der Erwartung für ein Isomerengemisch in Signalverschiebung und Integration.

A) Synthese von rac-Dimethylsilyl(2-Me-1-indenyl)$_2$zirkondichlorid

1,68 g (5,31 mmol) des Chelatliganden Dimethylsilyl(2-methylinden)$_2$ wurden in 50 $cm^3$ THF gegeben und 6,63 $cm^3$ einer 1,6 n (10,61 mmol) n-BuLi-n-Hexan-Lösung zugetropft. Die Zugabe erfolgte bei Umgebungstemperatur innerhalb 0,5 h. Nach 2 stündigem Rühren bei ca. 35°C wurde das Lösemittel im Vakuum abgezogen und der Rückstand mit n-Pentan verrührt, abfiltriert und getrocknet.

Das so erhaltene Dilithiosalz wurde bei -78°C zu einer Suspension von 1,24 g (5,32 mmol) $ZrCl_4$ in 50 $cm^3$ $CH_2Cl_2$ gegeben und die Mischung 3 h bei dieser Temperatur gerührt. Nach Erwärmung auf Raumtemperatur über Nacht, wurde eingedampft. Das 1-H-NMR-Spektrum zeigte, neben dem Vorliegen von etwas $ZrCl_4(thf)_2$, ein rac-meso-Gemisch. Nach Verrühren mit n-Pentan und Trocknen wurde der feste, gelbe Rückstand in THF suspendiert, abfiltriert und NMR-spektroskopisch untersucht. Diese drei Arbeitsschritte wurden mehrmals wiederholt; schließlich wurden 0,35 g (0,73 mmol-14 %) Produkt erhalten, in dem die rac-Form, nach 1-H-NMR, auf mehr als 17:1 angereichert war.

Die Verbindung zeigte eine korrekte Elementaranalyse und die folgenden NMR-Signale ($CDCl_3$, 100 MHz) : $\delta$ = 1,25 (s, 6H, Si-Me); 2,18 (s, 6H, 2-Me), 6,8 (s, 2H, 3-H-Ind); 6,92-7,75 (m, 8H, 4-7-H-Ind).

B) Synthese von rac-Dimethylsilyl(2-Me-1-indenyl)$_2$-zirkondimethyl

0,24 g (0,58 mmol) rac-Dimethylsilyl(2-Me-1-indenyl)$_2$-zirkondichlorid in 40 $cm^3$ $Et_2O$ wurden bei -50 °C tropfenweise mit 1,3 $cm^3$ einer 1,6 n (2,08 mmol) etherischen MeLi-Lösung versetzt und 2 h bei -10 °C gerührt. Nach Austausch des Lösemittels gegen n-Pentan wurde noch 1,5 h bei Raumtemperatur gerührt und der filtrierte Rückstand im Vakuum sublimiert. Es wurden 0,19 g (0,44 mmol-81 %) Sublimat mit einer korrekten Elementaranalyse erhalten.

C) Umsetzung von rac-Dimethylsilyl(2-Me-1-indenyl)$_2$-zirkondimethyl mit $[Bu_3NH][B(C_6H_5)_4]$

0,17 g (0,39 mmol) rac-Dimethylsilyl(2-Me-1-indenyl)$_2$-zirkondimethyl wurden bei 0 °C zu 0,18 g (0,36 mmol) $[Bu_3NH][B(C_6H_5)_4]$ in 25 $cm^3$ Toluol gegeben. Unter einstündigem Rühren wurde auf Umgebungstemperatur erwärmt. Die tiefgefärbte Mischung wurde dann zur Trockne eingedampft.

Für die Polymerisation wurde ein aliquoter Teil der Reaktionsmischung verwendet.

D) Synthese von rac-Ethylen(2-Me-1-indenyl)$_2$-zirkondichlorid

Zu 5,07 g (17,7 mmol) Ligand Ethylen(2-methylinden)$_2$ in 200 $cm^3$ THF wurde bei Raumtemperatur 14,2 $cm^3$ 2,5 n (35,4 mmol) n-BuLi-n-Hexan-Lösung innerhalb 1 h zugetropft und dann 3 h bei ca. 50 °C gerührt. Dabei geht ein zwischenzeitlich gebildeter Niederschlag wieder in Lösung. Über Nacht wurde stehengelassen.

6,68 g (17,7 mmol) $ZrCl_4(thf)_2$ in 250 $cm^3$ THF wurden simultan mit obiger Dilithiosalzlösung zu ca. 50 $cm^3$ THF bei 50 °C zugetropft und dann 20 h bei dieser Temperatur gerührt. Der Toluolextrakt des Eindampfrückstands wurde eingedampft. Nach Extraktion des Rückstands mit wenig THF wurde aus Toluol umkristallisiert. Dabei wurden 0,44 g (0,99 mmol-5,6 %) Produkt erhalten, wobei die rac-Form besser als 15:1 angereichert war.

Die Verbindung zeigte eine korrekte Elementaranalyse und die folgenden NMR-Signale ($CDCl_3$, 100 MHz) : $\delta$ = 2,08 (2s, 6H, 2-Me); 3,45-4,18 (m, 4H, $-CH_2CH_2-$), 6,65 (2H, 3-H-Ind); 7,05-7,85 (m, 8H, 4-7-H-Ind).

E) Synthese von rac-Ethylen(2-Me-1-indenyl)$_2$zirkondimethyl

Zu 0,31 g (0,68 mmol) rac-Ethylen(2-Me-1-indenyl)$_2$-zirkondichlorid in 40 $cm^3$ $Et_2O$ wurden bei -50 °C 1,5 $cm^3$ einer 1,6 n (2,4 mmol) etherischen MeLi-Lösung zugegeben und 2 h bei -40 °C gerührt. Nach Austausch des Lösemittels gegen n-Pentan wurde 1,5 h bei Umgebungstemperatur gerührt, filtriert und eingedampft. Es wurden 0,22 g (0,54

mmol-80 %) Sublimat mit korrekter Elementaranalyse erhalten.

F) Umsetzung von rac-Ethylen(2-Me-1-indenyl)$_2$-zirkondimethyl mit $[Bu_3NH][B(p\text{-}Tolyl)_4]$

0,13 g (0,32 mmol) rac-Ethylen(2-Methyl-1-indenyl)$_2$-zirkondimethyl wurden zu 0,16 g (0,28 mmol) $[Bu_3NH][B(p\text{-}Tol)_4]$ in 20 $cm^3$ Toluol gegeben und 1 h bei Umgebungstemperatur gerührt. Nach Abziehen des Lösemittels wurde im Vakuum getrocknet.

Für die Polymerisation wurde ein aliquoter Teil der Reaktionsmischung verwendet.

Beispiel 1

Ein trockener 24 $dm^3$-Reaktor wurde mit Stickstoff gespült und mit 12 $dm^3$ flüssigem Propylen befüllt.

Dann wurden 35 $cm^3$ toluolische Methylaluminoxanlösung (entsprechend 52 mmol Al, mittlerer Oligomerisierungsgrad n = 17) zugegeben und der Ansatz bei 30 °C 15 Minuten gerührt.

Parallel dazu wurden 6,9 mg (0,015 mmol) rac-Ethylen(2-Me-1-indenyl)$_2$zirkondichlorid in 13,5 $cm^3$ toluolischer Methylaluminoxanlösung (20 mmol Al) gelöst und durch 15 minütiges Stehenlassen voraktiviert.

Die Lösung wurde dann in den Reaktor gegeben, durch Wärmezufuhr auf 70 °C aufgeheizt (10°C/min) und das Polymerisationssystem 1 h durch Kühlung bei 70 °C gehalten. Gestoppt wurde die Polymerisation durch Abgasen des überschüssigen Monomeren. Es wurden 1,56 kg Polypropylen erhalten.
Die Aktivität des Metallocens betrug somit 226 kgPP/g Metallocen x h.
VZ = 67 $cm^3$/g; $M_w$ = 58 900 g/mol; $M_w/M_n$ = 2,0;
II = 95,9 %; SD = 350 g/$dm^3$

Beispiel 2

Beispiel 1 wurde wiederholt, es wurden jedoch 10,1 mg (0,023 mmol) des Metallocens verwendet und es wurde bei 50 °C polymerisiert.

Es wurden 0,51 kg Polymerpulver erhalten, entsprechend einer Metallocenaktivität von 50,5 kgPP/g Metallocen x h.
VZ = 100 $cm^3$/g; $M_w$ = 108 500 g/mol; $M_w/M_n$ = 2,2;
II = 96,4 %; MFI (230/5) = 210 g/10 min

Beispiel 3

Beispiel 1 wurde wiederholt, es wurden jedoch 10,5 mg (0,023 mmol) des Metallocens eingesetzt und es wurde bei 30 °C 10 h polymerisiert.

Es wurden 1,05 kg Polymerpulver erhalten, entsprechend einer Metallocenaktivität von 10,0 kgPP/g Metallocen x h.
VZ = 124 $cm^3$/g; $M_w$ = 157 000 g/mol; $M_w/M_n$ = 2,2;
II = 96,3 %; MFI (230/5) = 104 g/10 min

Vergleichsbeispiele A - C

In zu den Beispielen 1 bis 3 analoger Weise wurde unter Verwendung des Metallocens rac-Ethylenbisindenylzirkondichlorid polymerisiert. Die Viskositätszahlen und Molmassen der dabei erhaltenen Polymerprodukte betrugen:

| Vergl.-beisp. | Polym.temp. [°C] | VZ [$cm^3$/g] | $M_w$ [g/mol] |
|---|---|---|---|
| A | 70 | 30 | 19 900 |
| B | 50 | 46 | 38 500 |
| C | 30 | 60 | 48 700 |

Diese Vergleichsbeispiele zeigen den molmassenerhöhenden Einfluß des Substituenten in 2-Position am Indenylliganden.

Beispiel 4

Es wurde verfahren wie in Beispiel 1, verwendet wurden jedoch 4,0 mg (0,008 mmol) rac-Dimethylsilyl(2-methyl-1-indenyl)$_2$zirkondichlorid.
Die Metallocenaktivität betrug 293 kgPP/g Metallocen x h.

VZ = 171 $cm^3/g$; $M_w$ = 197 000 g/mol; $M_w/M_n$ = 2,5;
II = 96,0 %; MFI (230/5) = 43,2 g/10 min; SD = 460 $g/dm^3$, Schmp. = 145°C

Beispiel 5

Es wurde verfahren wie in Beispiel 1, verwendet wurden jedoch 6,0 mg (0,013 mmol) rac-Dimethylsilyl(2-methyl-1-indenyl)$_2$zirkondichlorid.

Die Polymerisationstemperatur betrug 60 °C, die Polymerisationszeit 1 h.
Die Metallocenaktivität betrug 178 kgPP/g Metallocen x h.
VZ = 217 $cm^3/g$; $M_w$ = 297 000 g/mol; $M_w/M_n$ = 2,3;
II = 96,4 %; MFI (230/5) = 12,9 g/10 min, Schmp. = 148°C

Beispiel 6

Es wurde verfahren wie in Beispiel 1, verwendet wurden jeodch 2,4 mg (0,0052 mmol) rac-Dimethylsilyl(2-methyl-1-indenyl)$_2$zirkondichlorid. Die Polymerisationstemperatur betrug 50 °C, die Polymerisationszeit 3 h.
Die Metallocenaktivität betrug 89 kgPP/g Metallocen x h.
VZ = 259 $cm^3/g$; $M_w$ = 342 500 g/mol; $M_w/M_n$ = 2,1;
II = 96,8 %; MFI (230/5) = 8,1 g/10 min, Schmp. = 150°C

Beispiel 7

Es wurde verfahren wie in Beispiel 1, verwendet wurden jedoch 9,9 mg (0,021 mmol) rac-Dimethylsilyl(2-methyl-1-indenyl)$_2$zirkondichlorid.

Die Polymerisationstemperatur betrug 30 °C, die Polymerisationszeit 2 h.
Die Metallocenaktivität betrug 26,5 kgPP/g Metallocen x h.
VZ = 340 $cm^3/g$; $M_w$ = 457 000 g/mol; $M_w/M_n$ = 2,4;
II = 96,0 %; MFI (230/5) = 2,5 g/10 min, Schmp. = 153°C

Beispiel 8

Ein trockener 24 $dm^3$-Reaktor wurde mit Stickstoff gespült und mit 6 $dm^3$ eines entaromatisierten Benzinschnittes mit dem Siedebereich 100-120°C sowie 6 $dm^3$ flüssigem Propylen befüllt. Dann wurden 35 $cm^3$ toluolische Methylaluminoxanlösung (entsprechend 52 mmol Al, mittlerer Oligomerisierungsgrad n = 17) zugegeben und der Ansatz bei 30 °C 30 Minuten gerührt.

Parallel dazu wurden 14,7 mg (0,031 mmol) rac-Dimethylsilyl(2-methyl-1-indenyl)$_2$zirkondichlorid in 13,5 $cm^3$ toluolischer Methylaluminoxanlösung (20 mmol Al) gelöst und durch 30 minütiges stehenlassen voraktiviert.

Die Lösung wurde dann in den Reaktor gegeben und das Polymerisationssystem 1 h bei 50 °C durch Kühlung gehalten. Die Polymerisation wurde durch Zugabe von 50 $cm^3$ Isopropanol gestoppt.
Die Metallocenaktivität betrug 159,2 kgPP/g Metallocen x h.
VZ = 188 $cm^3/g$; $M_w$ = 240 000 g/mol; $M_w/M_n$ = 2,1;
II = 96,0 %; MFI (230/5) = 28,6 g/10 min, Schmp. = 149°C

Beispiel 9

Beispiel 8 wurde wiederholt, es wurden jedoch 15,2 mg (0,032 mmol) des Metallocens verwendet, die Polymerisationszeit war 2 h und die Polymerisationstemperatur war 30 °C.

Die Metallocenaktivität betrug 24,1 kgPP/g Metallocen x h.
VZ = 309 $cm^3/g$; $M_w$ = 409 000 g/mol; $M_w/M_n$ = 2,3;
II = 97,0 %; MFI (230/5) = 3,5 g/10 min, Schmp. = 153°C

Vergleichsbeispiele D - F

In zu den Beispielen 4, 6 und 7 analoger Weise wurde unter Verwendung des Metallocens Dimethylsilylbisindenylzirkondichlorid polymerisiert. Die Viskositätszahlen und Molmassen der dabei erhaltenen Polymerprodukte betrugen:

| Vergl.-beisp. | Polym.temp. [°C] | VZ [$cm^3/g$] | $M_w$ [g/mol] |
|---|---|---|---|
| D | 70 | 47 | 37 500 |
| E | 50 | 60 | 56 000 |
| F | 30 | 77 | 76 900 |

Diese Beispiele zeigen den molmassenerhöhenden Einfluß des Substituenten in 2-Position am Indenylliganden.

Beispiel 10

Ein trockener 16 $dm^3$-Reaktor wurde mit Stickstoff gespült. Dann wurden 40 $dm^3$ (entsprechend 2,5 bar) Wasserstoff und schließlich 10 $dm^3$ flüssiges Propylen sowie 29,2 $cm^3$ toluolische Methylaluminoxanlösung (entsprechend 40 mmol Al, mittlerer Oligomerisierungsgrad war 17) zudosiert und bei 30 °C 10 Minuten gerührt.

Parallel dazu wurden 2,7 mg (0,006 mmol) rac-Dimethylsilyl(2-Me-1-indenyl)$_2$zirkondichlorid in 11,2 $cm^3$ toluolischer Methylaluminoxanlösung (20 mmol) gelöst und nach 10 Minuten in den Reaktor gegeben. Nach Aufheizen auf 50 °C wurde 3 h polymerisiert. Durch Zugabe von $CO_2$-Gas wurde der Ansatz gestoppt und überschüssiges Monomer abgegast.

Die Metallocenaktivität betrug 102,9 kgPP/g Metallocen x h.
VZ = 25 $cm^3/g$; $M_w$ = 8 500 g/mol; $M_w/M_n$ = 2,4;
keine olefinischen Kettenenden laut $^{13}C$-NMR,
II = 97,8 %; Schmp. = 149°C

Beispiel 11

Beispiel 10 wurde wiederholt, es wurden jedoch 5,0 mg (0,011 mmol) rac-Dimethylsilyl(2-Me-1-indenyl)$_2$-zirkondimethyl und 16 $dm^3$ (entsprechend 1 bar) Wasserstoff verwendet.

Es wurde bei 60 °C 50 Minuten polymerisiert.
Die Metallocenaktivität betrug 204 kgPP/g Metallocen x h.
VZ = 47 $cm^3/g$; $M_w$ = 41 100 g/mol; $M_w/M_n$ = 2,2;
keine olefinischen Kettenenden laut $^{13}C$-NMR,
II = 96,9 %; Schmp. = 148°C

Beispiel 12

Beispiel 11 wurde mit 4,2 mg (0,01 mmol) rac-Dimethylsilyl(2-Me-1-indenyl)$_2$zirkondimethyl wiederholt. Die Polymerisationstemperatur war jedoch 70 °C und die Polymerisationszeit betrug 1 h.
Die Metallocenaktivität war 354 kgPP/g Metallocen x h.
VZ = 38 $cm^3/g$; $M_w$ = 34 900 g/mol; $M_w/M_n$ = 2,1;
laut $^{13}C$-NMR keine olefinischen Kettenenden,
II = 96,7 %; Schmp. = 146°C

Die Beispiele 10 bis 12 zeigen die gute Wasserstoffregelbarkeit der Molmasse unter Verwendung des erfindungsgemäßen Polymerisationsverfahrens.

Beispiel 13

Beispiel 11 wurde wiederholt, es wurde jedoch kein Wasserstoff verwendet.
Die Metallocenaktivität betrug 182,4 kgPP/g Metallocen x h.
VZ = 210 $cm^3/g$; $M_w$ = 288 000 g/mol; $M_w/M_n$ = 2,2;
II = 96,2 %;

Beispiel 14

Beispiel 11 wurde wiederholt, es wurden jedoch 4,2 mg (0,01 mmol) rac-Ethylen(2-Me-1-indenyl)$_2$zirkondimethyl verwendet.
Die Metallocenaktivität betrug 144,3 kgPP/g Metallocen x h.
VZ = 16 $cm^3/g$; $M_w$ = 8 900 g/mol; $M_w/M_n$ = 2,0;
II = 96,0 %;

Beispiel 15

Ein trockener 24 $dm^3$-Reaktor wurde mit Stickstoff gespült und mit 12 $dm^3$ flüssigem Propylen sowie mit 4,0 $cm^3$ toluolischer Methylaluminoxanlösung (entsprechend 6 mmol Al, mittlerer Oligomerisierungsgrad war 17) befüllt und bei 30 °C 15 Minuten gerührt. Dann wurden 2,5 $cm^3$ der toluolischen Reaktionsmischung von rac-Dimethylsilyl(2-Me-1-indenyl)$_2$zirkondimethyl und $[Bu_3NH][B(C_6H_5)_4]$, die in der Metallocensynthese Punkt C) beschrieben wurde (entsprechend 17 mg (0,04 mmol) Metallocen), in den Kessel dosiert. Bei 50 °C wurde 1 h polymerisiert.
Die Metallocenaktivität betrug 61,4 kgPP/g Metallocen x h.
VZ = 238 $cm^3$/g; $M_w$ = 328 500 g/mol; $M_w/M_n$ = 2,2;
II = 96,0 %;

Beispiel 16

Beispiel 15 wurde wiederholt, es wurden jedoch 2,5 $cm^3$ der toluolischen Reaktionsmischung von rac-Ethylen (2-methyl-1-indenyl)$_2$zirkondimethyl und $[Bu_3NH][B(p\text{-}Tolyl)_4]$, die in der Metallocensynthese Punkt F) beschrieben wurde (entsprechend 16,3 mg (0,04 mmol) Metallocen), verwendet.
Die Metallocenaktivität betrug 42,9 kgPP/g Metallocen x h.
VZ = 105 $cm^3$/g; $M_w$ = 110 500 g/mol; $M_w/M_n$ = 2,3;
II = 96,0 %;

Beispiel 17

Beispiel 15 wurde wiederholt, statt der Methylaluminoxanlösung wurde jedoch eine toluolische Trimethylaluminiumlösung (8 mmol Al) verwendet.
Die Metallocenaktivität betrug 55,3 kgPP/g Metallocen x h.
VZ = 264 $cm^3$/g; $M_w$ = 367 000 g/mol; $M_w/M_n$ = 2,3;
II = 96,2 %;

Beispiel 18

Beispiel 17 wurde wiederholt, es wurde jedoch kein Trimethylaluminium in der Polymerisation verwendet.

Das eingesetzte Propylen wurde vor Zugabe in das Polymerisationssystem mit Triethylaluminium (1 mmol $AlEt_3$/$dm^3$ Propylen) gereinigt, die Reaktionsprodukte und $AlEt_3$ wurden destillativ abgetrennt.
Die Metallocenaktivität betrug 56,9 kgPP/g Metallocen x h.
VZ = 278 $cm^3$/g; $M_w$ = 362 000 g/mol; $M_w/M_n$ = 2,3;
II = 96,3 %;

Beispiel 19

Ein trockener 16 $dm^3$-Reaktor wurde mit Stickstoff gespült und bei 20 °C mit 10 $dm^3$ eines entaromatisierten Benzinschnittes mit dem Siedebereich 100 - 120 °C gefüllt.

Dann wurde der Gasraum des Kessels durch 5-maliges Aufdrücken von 2 bar Ethylen und Entspannen stickstofffrei gespült.

Dann wurden 30 $cm^3$ toluolische Methyaluminoxanlösung (entsprechend 45 mmol Al, Molmasse nach kryoskopischer Bestimmung 750 g/mol) zugegeben.

Unter Rühren wurde der Reaktorinhalt innerhalb von 15 Minuten auf 60 °C aufgeheizt und durch Zugabe von Ethylen wurde bei 250 Upm Rührgeschwindigkeit der Gesamtdruck auf 5 bar eingestellt.

Parallel dazu wurden 2,3 mg (0,005 mmol) rac-Ethylen(2-methyl-1-indenyl)$_2$zirkondichlorid in 20 $cm^3$ toluolischer Methylaluminoxanlösung gelöst und durch 15 minütiges Stehenlassen voraktiviert. Dann wurde die Lösung in den Reaktor gegeben, das Polymerisationssystem wurde auf eine Temperatur von 70°C gebracht und durch entsprechende Kühlung 1 h bei dieser Temperatur gehalten. Der Gesamtdruck wurde während dieser Zeit durch entsprechende Zufuhr von Ethylen bei 5 bar gehalten.

Es wurden 420 g Polyethylen erhalten, entsprechend einer Metallocenaktivität von 182,6 kgPE/g Metallocen x h. Die Viskositätszahl betrug 300 $cm^3$/g.

Vergleichsbeispiel G

Unter zu Beispiel 19 analogen Bedingungen wurde mit dem Metallocen rac-Ethylen(1-indenyl)$_2$zirkondichlorid po-

lymerisiert. Es wurde ein Polyethylen mit einer Viskositätszahl von 210 $cm^3/g$ erhalten.

Das Vergleichsbeispiel belegt den molmassensteigernden Einfluß einer Substitution in 2-Stellung am Indenylliganden.

Beispiel 20

Beispiel 7 wurde wiederholt, als Aluminoxan wurde jedoch Isobutylmethylaluminoxan in gleicher Al-Konzentration und -Menge verwendet.
Die Metallocenaktivität betrug 27,4 kgPP/g Metallocen x h, $M_w$ war 477 500 g/mol, die VZ war 340 $cm^3/g$ und $M_w/M_n$ war 2,2. Isobutylmethylaluminoxan wurde durch Umsetzung einer Mischung von Isobutyl-$AlMe_2$ und $AlMe_3$ mit Wasser in Heptan erhalten und enthielt 9 Mol.-% Isobutyl- und 91 Mol.-% Methyl-Einheiten.

Beispiel 21

Beispiel 7 wurde wiederholt, als Aluminoxan wurde jedoch Hydridomethylaluminoxan (hergestellt aus $Me_2AlH$ und Wasser in Toluol) in gleicher Al-Konzentration und Menge verwendet.
Die Aktivität betrug 22,9 kgPP/g Metallocen x h, $M_w$ war 469 500 g/mol, die VZ war 339 $cm^3/g$ und $M_w/M_n$ war 2,0.

Beispiel 22

Ein trockener 150 $dm^3$-Reaktor wurde mit Stickstoff gespült und bei 20°C mit 80 $dm^3$ eines entaromatisierten Benzinschnittes mit dem Siedebereich 100 - 120°C gefüllt. Dann wurde der Gasraum durch 5-maliges Aufdrücken von 2 bar Propylen und Entspannen stickstofffrei gespült.

Nach Zugabe von 50 l flüssigem Propylen wurden 64 $cm^3$ toluolische Methylaluminoxanlösung (entsprechend 100 mmol Al, Molmasse nach kryoskopischer Bestimmung 990 g/mol) zugegeben und der Reaktorinhalt auf 30°C aufgeheizt.

Durch Zudosierung von Wasserstoff wurde ein Wasserstoffgehalt im Gasraum des Reaktors von 0,3 % eingestellt und später dann durch Nachdosierung während der gesamten Polymerisationszeit gehalten (Überprüfung on-Line durch Gaschromatographie).

24,3 mg rac-Dimethylsilyl(2-methyl-1-indenyl)$_2$zirkondichlorid (0,05 mmol) wurden in 32 ml toluolischer Methylaluminoxanlösung (entsprechend 50 mmol Al) gelöst und nach 15 Minuten in den Reaktor gegeben.

Durch Kühlung wurde der Reaktor 24 h bei 30°C Polymerisationstemperatur gehalten, dann wurde durch Zugabe von 2 bar $CO_2$-Gas die Polymerisation gestoppt und das gebildete Polymere auf einer Drucknutsche vom Suspensionsmedium abgetrennt. Die Trocknung des Produktes erfolgte 24 h bei 80°C/200 mbar. Es wurden 10,5 kg Polymerpulver, entsprechend einer Metallocenaktivität von 18,0 kgPP/g Metallocen x h erhalten.
VZ = 256 $cm^3/g$; $M_w$ = 340 500 g/mol, $M_w/M_n$ = 2,2;
II = 97,3 %; MFI (230/5) = 5,5 g/10 min, Schmp. = 156°C

Beispiel 23

Beispiel 22 wurde wiederholt, im Gasraum wurden jedoch 0,6 % $H_2$ eingestellt, es wurden 20,6 mg (0,043 mmol) des Metallocens eingesetzt und die Polymerisationstemperatur betrug 50°C.

Es wurden 19,2 kg Polymerpulver, entsprechend einer Metallocenaktivität von 38,8 kgPP/g Metallocen x h erhalten.
VZ = 149 $cm^3/g$; $M_w$ = 187 500 g/mol; $M_w/M_n$ = 2,3;
II = 97,0 %; MFI (230/5) = 82 g/10 min, Schmp. = 150°C

Beispiel 24

Beispiel 23 wurde wiederholt, es wurde jedoch kein Wasserstoff verwendet, die Metalloceneinwaage betrug 31,0 mg (0,065 mmol) und die Polymerisationsdauer war 4 h.

Es wurden 8,0 kg Polymerpulver, entsprechend einer Metallocenaktivität von 64,5 kgPP/g Metallocen x h erhalten.
VZ = 175 $cm^3/g$; $M_w$ = 229 000 g/mol; $M_w/M_n$ = 2,2;
II = 97,1 %; MFI (230/5) = 35 g/10 min, Schmp. = 150°C

Beispiel 25

Beispiel 1 wurde wiederholt, es wurden jedoch 4,1 mg (0,008 mmol) des Metallocens rac-Phenyl(methyl)silyl-(2-methyl-1-indenyl)$_2$$ZrCl_2$ verwendet.

Es wurden 1,10 kg Polypropylen erhalten, entsprechend einer Aktivität des Metallocens von 269 kgPP/g Metallocen x h.
VZ = 202 $cm^3/g$; $M_w$ = 230 000 g/mol; $M_w/M_n$ = 2,3; II = 97 %;
MFI (230/5) = 36 g/10 min; Schmp. = 147°C.

Beispiel 26

Beispiel 25 wurde mit 11,0 mg (0,02 mmol) des Metallocens wiederholt, die Polymerisationstemperatur betrug jedoch 50°C.
Es wurden 1,05 kg Polypropylen erhalten. Die Aktivität des Metallocens betrug somit 95,5 kgPP/g Metallocen x h.
VZ = 347 $cm^3/g$; $M_w$ = 444 000 g/mol; $M_w/M_n$ = 2,5;
MFI (230/5) = 5,2 g/10 min; Schmp. = 149°C

Beispiel 27

Beispiel 25 wurde mit 22,5 mg (0,04 mmol) des Metallocens wiederholt, die Polymerisationstemperatur betrug jedoch 30°C.
Es wurden 0,57 kg Polypropylen erhalten, die Aktivität des Metallocens betrug somit 25,3 kgPP/g Metallocen x h.
VZ = 494 $cm^3/g$; $M_w$ = 666 000 g/mol; $M_w/M_n$ = 2,5;
MFI (230/5) = 1,3 g/10 min; Schmp. = 152°C

Beispiel 28

Beispiel 1 wurde wiederholt, es wurden jedoch 5,2 mg (0,009 mmol) des Metallocens rac-Diphenylsilyl(2-methyl-1-indenyl)$_2$ $ZrCl_2$ verwendet.
Es wurden 1,14 kg Polypropylen erhalten. Die Metallocenaktivität betrug somit 219 kgPP/g Metallocen x h.
VZ = 298 $cm^3/g$; $M_w$ = 367 000 g/mol; $M_w/M_n$ = 2,2;
MFI (230/5) = 7,1 g/10 min

Beispiel 29

Beispiel 28 wurde mit 12,6 mg (0,02 mmol) des Metallocens wiederholt, die Polymerisationstemperatur betrug jedoch 40°C.
Es wurden 0,44 kg Polypropylen erhalten, die Metallocenaktivität betrug somit 34,9 kgPP/g Metallocen x h.
VZ = 646 $cm^3/g$; $M_w$ = 845 000 g/mol; $M_w/M_n$ = 2,4;
MFI (230/5) = 0,1 g/10 min; Schmp. = 155°C.

Beispiel 30

Beispiel 1 wurde wiederholt, es wurden jedoch 17,4 mg (0,038 mmol) des Metallocens rac-Methylethylen(2-methyl-1-indenyl)$_2ZrCl_2$ verwendet.
Es wurden 2,89 kg Polypropylen erhalten. Die Metallocenaktivität betrug somit 165,9 kgPP/g Metallocen x h.
VZ = 138 $cm^3/g$; $M_w$ = 129 000 g/mol; $M_w/M_n$ = 2,2;
Schmp. = 150°C

Beispiel 31

Beispiel 30 wurde mit 15,6 mg (0,034 mmol) des Metallocens wiederholt, die Polymerisationstemperatur betrug jedoch 50°C und die Polymerisationszeit 2 h.
Es wurden 2,86 kg Polypropylen erhalten. Die Metallocenaktivität betrug somit 91,7 kgPP/g Metallocen x h.
VZ = 244 $cm^3/g$; $M_w$ = 243 500 g/mol; $M_w/M_n$ = 2,1;
Schmp. = 155°C

Beispiel 32

Beispiel 30 wurde mit 50,8 mg (0,110 mmol) des Metallocens wiederholt, die Polymerisationstemperatur betrug jedoch 30°C.
Es wurden 1,78 kg Polypropylen erhalten, die Metallocenaktivität betrug somit 17,5 kgPP/g Metallocen x h.

VZ = 409 $cm^3/g$; $M_w$ = 402 000 g/mol; $M_w/M_n$ = 2,2; MFI (230/5) = 3,5 g/10 min; Schmp. = 160°C

Beispiel 33

Beispiel 1 wurde wiederholt, es wurden jedoch 9,6 mg (0,02 mmol) des Metallocens rac-Dimethylsilyl(2-ethyl-1-indenyl)$_2$-Zirkondichlorid verwendet.

Es wurden 1,68 kg Polypropylen, entsprechend einer Metallocenaktivität von 175,0 kgPP/g Metallocen x h, erhalten.

VZ = 143 $cm^3/g$; $M_w$ = 132 000 g/mol; $M_w/M_n$ = 2,3; Schmp. = 140°C

Beispiel 34

Beispiel 33 wurde wiederholt, es wurden jedoch 10,4 mg (0,021 mmol) des Metallocens eingesetzt und die Polymerisationstemperatur betrug 50°C.

Es wurden 1,00 kg Polypropylen, entsprechend einer Metallocenaktivität von 96,2 kgPP/g Metallocen x h, erhalten.

VZ = 303 $cm^3/g$; $M_w$ = 449 500 g/mol; $M_w/M_n$ = 2,2; Schmp. = 145°C

Beispiel 35

Beispiel 33 wurde mit 24,5 mg (0,049 mmol) des Metallocens bei 30°C Polymerisationstemperatur wiederholt.

Es wurden 0,49 kg Polypropylen, entsprechend einer Metallocenaktivität von 19,6 kgPP/g Metallocen x h, erhalten.

VZ = 442 $cm^3/g$; $M_w$ = 564 000 g/mol; $M_w/M_n$ = 2,2; Schmp. = 150°C

Beispiel 36

Ein trockener 24-$dm^3$-Reaktor wurde mit Stickstoff gespült und mit 2,4 $Ndm^3$ Wasserstoff sowie 12 $dm^3$ flüssigem Propylen befüllt.

Dann wurden 35 $cm^3$ toluolische Methylaluminoxanlösung (entsprechend 52 mmol Al, mittlerer Oligomerisierungsgrad p = 17) zugegeben.

Parallel dazu wurden 8,5 mg (0,02 mmol) rac-Dimethylsilyl(2-methyl-1-indenyl)$_2$zirkondichlorid in 13,5 $cm^3$ toluolischer Methylaluminoxanlösung (20 mmol Al) gelöst und durch 5 minütiges Stehenlassen voraktiviert.

Die Lösung wurde dann in den Reaktor gegeben. Unter kontinuierlicher Zugabe von 50 g Ethylen wurde 1 h bei 55°C polymerisiert.

Die Metallocenaktivität betrug 134 kg $C_2/C_3$-Copo/g Metallocen x h.

Der Ethylengehalt des Copolymeren betrug 4,3 %.

VZ = 289 $cm^3/g$; $M_w$ = 402 000 g/mol; $M_w/M_n$ = 2,0
MFI (230/5) = 7,0 g/10 min

Das Ethylen wurde weitgehend isoliert eingebaut ($^{13}C$-NMR, mittlere Blocklänge $C_2$ < 1,2)

Beispiel 37

Ein trockener 150-$dm^3$-Reaktor wurde wie in Beispiel 22 beschrieben vorbereitet und mit Propylen und Katalysator beschickt.

Die Polymerisation erfolgte in einer 1. Stufe bei 50°C 10 Stunden lang.

In einer 2. Stufe wurden zunächst 1 kg Ethylen schnell zugegeben und weitere 2 kg Ethylen während 4 Stunden kontinuierlich zudosiert.

Es wurden 21,5 kg Blockcopolymerpulver erhalten.

VZ = 326 $cm^3/g$; $M_w$ = 407 000 g/mol; $M_w/M_n$ = 3,1;
MFI (230/5) = 4,9 g/10 min

Das Blockcopolymer enthielt 12,5 % Ethylen.

Die Fraktionierung ergab einen Gehalt von 24 % Ethylen-Propylen-Kautschuk im Copolymeren. Die mechanischen Daten des Copolymers waren:

Kugeldruckhärte (DIN 53456, gepreßte Platten, 3 h bei 140°C getempert, 132 H) 60 $Nmm^{-2}$, Kerbschlagzähigkeit ($a_{Kv}$, Spritzkörper DIN 53453) 23°C: ohne Bruch, 0°C: 39,5 $mJmm^{-2}$, -40°C: 20,1 $mJmm^{-2}$.

Das Produkt zeichnet sich durch eine außergewöhnliche Härte-Schlagzähigkeitsrelation aus und kann für Bauteile beispielsweise im Automobilbau (z.B. Stoßfänger) verwendet werden, wo hohe Steifheit gepaart mit hoher Schlagzähigkeit, insbesondere auch bei tiefen Temperaturen, gefordert wird.

Abkürzungen:

Me = Methyl, Et = Ethyl, Bu = Butyl, Ph = Phenyl,
THF = Tetrahydrofuran, PE = Polyethylen, PP = Polypropylen.

**Patentansprüche**

1. Verfahren zur Herstellung eines Olefinpolymers durch Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator besteht, wobei der Cokatalysator ein Aluminoxan und/oder eine salzartige Verbindung der Formel $R_xNH_{4-x}BR'_4$ oder der Formel $R_3PHBR'_4$ ist, worin x = 1,2 oder 3 ist, R = Alkyl oder Aryl gleich oder verschieden sind und R' = Aryl sind, das auch fluoriert oder teilfluoriert sein kann, dadurch gekennzeichnet, daß das Metallocen eine Verbindung der Formel I ist,

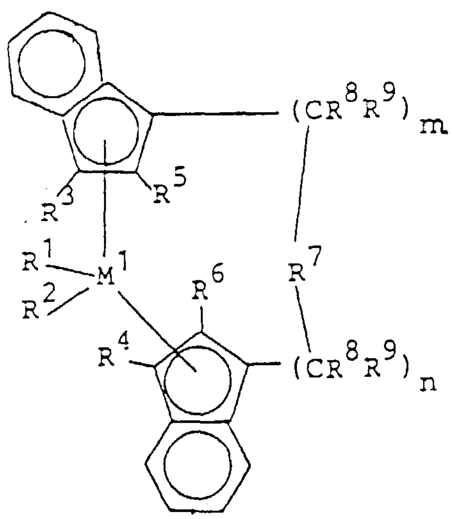

(I)

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ und $R^4$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{10}$, $-SR^{10}$, $-OSiR_3^{10}$, $SiR_3^{10}$, oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^5$ und $R^6$ | gleich oder verschieden sind und die für $R^3$ und $R^4$ genannte Bedeutung haben, mit der Maßgabe, daß $R^5$ und $R^6$ nicht Wasserstoff sind, |

$R^7$

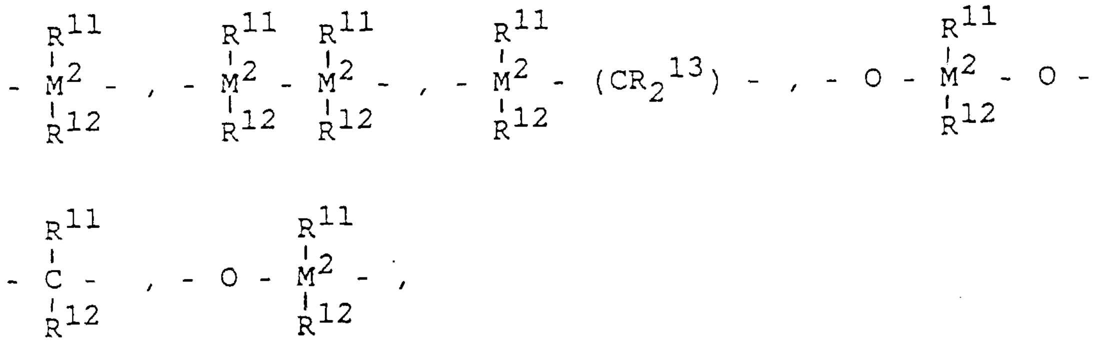

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben und

m und n gleich oder verschieden sind und null, 1 oder 2 sind, wobei m plus n null, 1 oder 2 ist.

**2.** Verfahren gemäß Anspruch 1, dadurch gekennzeichnet, daß in Formel I $M^1$ Zr oder Hf, $R^1$ und $R^2$ gleich oder verschieden sind und Methyl oder Chlor, $R^3$ und $R^4$ Wasserstoff, $R^5$ und $R^6$ gleich oder verschieden sind und Methyl, Ethyl oder Trifluormethyl, $R^7$ einen Rest

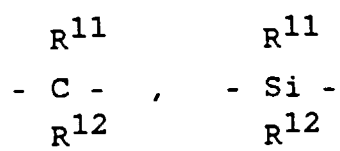

und n plus m null oder 1 bedeuten.

**3.** Verfahren gemäß Anspruch 1 oder 2, dadurch gekennzeichnet, daß die Verbindung der Formel I rac-Dimethylsilyl(2-methyl-1-indenyl)$_2$zirkondichlorid, rac-Ethylen(2-methyl-1-indenyl)$_2$-zirkondichlorid, rac-Dimethylsilyl(2-methyl-1-indenyl)$_2$zirkondimethyl, rac-Ethylen(2-methyl-1-indenyl)$_2$-zirkondimethyl, rac-Phenyl(methyl)silyl(2-methyl-1-indenyl)$_2$-zirkondichlorid, rac-Diphenylsilyl(2-methyl-1-indenyl)$_2$-zirkondichlorid, rac-Methylethylen(2-methyl-1-indenyl)$_2$-zirkondichlorid oder rac-Dimethylsilyl(2-ethyl-1-indenyl)$_2$-zirkondichlorid ist.

**4.** Verfahren gemäß einem oder mehreren der Ansprüche 1 bis 3, worin der Cokatalysator ein Aluminoxan der Formel (II)

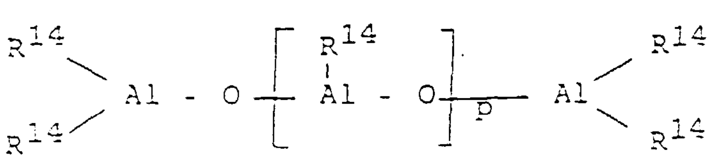

(II)

für den linearen Typ und/oder der Formel III

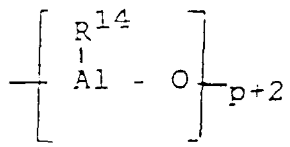

(III)

für den cyclischen Typ ist,
wobei in den Formeln (II) und (III) die Reste $R^{14}$ gleich oder verschieden sein können und eine $C_1$-$C_6$-Alkylgruppe, eine $C_6$-$C_{18}$-Arylgruppe oder Wasserstoff bedeuten und p eine ganze Zahl von 2 bis 50 bedeutet.

**5.** Verfahren gemäß einem oder mehreren der Ansprüche 1 bis 4, worin das Metallocen auf einen Träger aufgebracht ist.

**6.** Verfahren gemäß einem oder mehreren der Ansprüche 1 bis 5, worin das Metallocen vorpolymerisiert ist.

**7.** Verwendung eines Katalysators, welcher aus einem Metallocen der Formel I gemäß einem oder mehreren der Ansprüche 1 bis 3 als Übergangsmetallverbindung und einem Cokatalysator besteht, wobei der Cokatalysator ein Aluminoxan und/oder eine salzartige Verbindung der Formel $R_xNH_{4-x}BR'_4$ oder der Formel $R_3PHBR'_4$ ist, worin x = 1,2 oder 3 ist, R = Alkyl oder Aryl gleich oder verschieden sind und R' = Aryl sind, das auch fluoriert oder teilfluoriert sein kann, zur Polymerisation oder Copolymerisation eines Olefins der Formel $R^a$-CH=CH-$R^b$, worin $R^a$ und $R^b$ gleich oder verschieden sind und ein Wasserstoffatom oder einen Kohlenwasserstoffrest mit 1 bis 14 C-Atomen bedeuten, oder $R^a$ und $R^b$ mit den sie verbindenden Atomen einen Ring bilden können.

## Claims

**1.** A process for the preparation of an olefin polymer by polymerization or copolymerization of an olefin of the formula $R^a$-CH=CH-$R^b$, in which $R^a$ and $R^b$ are identical or different and are a hydrogen atom or a hydrocarbon radical having 1 to 14 C atoms, or $R^a$ and $R^b$, together with the atoms binding them, may form a ring, at a temperature of -60 to 200°C, at a pressure of 0.5 to 100 bar, in solution, in suspension or in the gas phase, in the presence of a catalyst which is composed of a metallocene as the transition metal compound and a cocatalyst, the cocatalyst being an aluminoxane and/or a salt-like compound of the formula $R_xNH_{4-x}BR'_4$ or of the formula $R_3PHBR'_4$ in which x is 1, 2 or 3, R are alkyl or aryl and are identical or different and R' is aryl, which may also be fluorinated or partially fluorinated, wherein the metallocene is a compound of the formula I

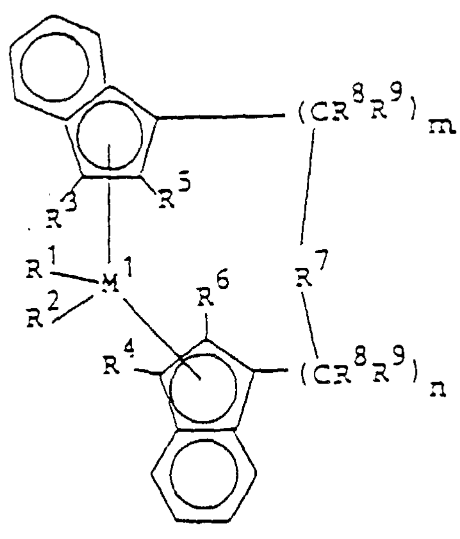

(I)

in which

$M^1$ is a metal of group IVb, Vb or VIb of the Periodic Table,

$R^1$ and $R^2$ are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-

$C_{40}$-alkylaryl group, a $C_8$-$C_{40}$-arylalkenyl group or a halogen atom,

$R^3$ and $R^4$ are identical or different and are a hydrogen atom, a halogen atom, a $C_1$-$C_{10}$-alkyl group which may be halogenated, a $C_6$-$C_{10}$-aryl group, an $-NR_2^{10}$, $-SR^{10}$, $-OSiR_3^{10}$, $-SiR_3^{10}$ or $-PR_2^{10}$ radical, wherein $R^{10}$ is a halogen atom, a $C_1$-$C_{10}$-alkyl group or a $C_6$-$C_{10}$-aryl group,

$R^5$ and $R^6$ are identical or different and have the meaning stated for $R^3$ and $R^4$, with the proviso that $R^5$ and $R^6$ are not hydrogen,

$R^7$ is

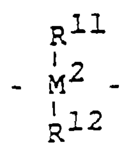 , 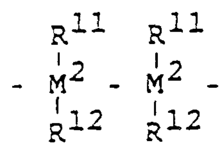 , 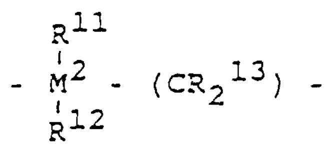 ,

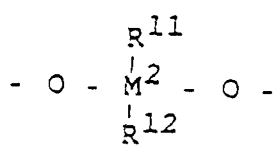 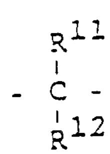 , 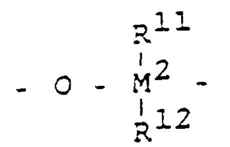 ,

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$,

wherein

$R^{11}$, $R^{12}$ and $R^{13}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$, together with the atoms binding them, each form a ring,

$M^2$ is silicon, germanium or tin,

$R^8$ and $R^9$ are identical or different and have the meaning stated for $R^{11}$ and

m and n are identical or different and are zero, 1 or 2, m plus n being zero, 1 or 2.

**2.** The process as claimed in claim 1, wherein, in formula I, $M^1$ is Zr or Hf, $R^1$ and $R^2$ are identical or different and are methyl or chlorine, $R^3$ and $R^4$ are hydrogen, $R^5$ and $R^6$ are identical or different and are methyl, ethyl or trifluoromethyl, $R^7$ is a radical

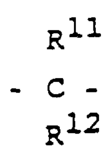 , 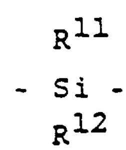

and n plus m is zero or 1.

**3.** The process as claimed in claim 1 or 2, wherein the compound of the formula I is rac-dimethylsilyl(2-methyl-1-indenyl)$_2$zirconium dichloride, rac-ethylene(2-methyl-1-indenyl)$_2$zirconium dichloride, rac-dimethylsilyl(2-methyl-1-indenyl)$_2$zirconiumdimethyl, rac-ethylene(2-methyl-1-indenyl)$_2$zirconiumdimethyl, rac-phenyl(methyl)silyl(2-methyl-1-indenyl)$_2$zirconium dichloride, rac-diphenylsilyl(2-methyl-1-indenyl)$_2$zirconium dichloride, rac-methylethylene(2-methyl-1-indenyl)$_2$zirconium dichloride or rac-dimethylsilyl(2-ethyl-1-indenyl)$_2$zirconium dichloride.

**4.** The process as claimed in one or more of claims 1 to 3, in which the cocatalyst is an aluminoxane of the formula (II)

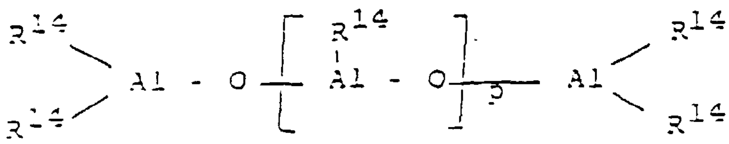 (II)

for the linear type and/or of the formula (III)

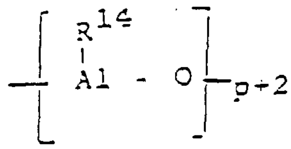 (III)

for the cyclic type,
where, in the formulae (II) and (III), the radicals $R^{14}$ may be identical or different and are a $C_1$-$C_6$-alkyl group, a $C_6$-$C_{18}$-aryl group or hydrogen, and p is an integer of from 2 to 50.

**5.** The process as claimed in one or more of claims 1 to 4, in which the metallocene is applied to a substrate.

**6.** The process as claimed in one or more of claims 1 to 5, in which the metallocene is prepolymerized.

**7.** The use of a catalyst which is composed of a metallocene of the formula I as claimed in one or more of claims 1 to 3 as the transition metal compound and a cocatalyst, the cocatalyst being an aluminoxane and/or a salt-like compound of the formula $R_xNH_{4-x}BR'_4$ or of the formula $R_3PHBR'_4$ in which x is 1, 2 or 3, R are alkyl or aryl and are identical or different and R' is aryl, which may also be fluorinated or partially fluorinated, for the polymerization or copolymerization of an olefin of the formula $R^a$-CH=CH-$R^b$, in which $R^a$ and $R^b$ are identical or different and are a hydrogen atom or a hydrocarbon radical having 1 to 14 C atoms, or $R^a$ and $R^b$, together with the atoms binding them, may form a ring.

## Revendications

**1.** Procédé pour préparer un polymère oléfinique par polymérisation ou copolymérisation d'une oléfine de formule $R^a$-CH=CH-$R^b$, où $R^a$ et $R^b$ sont identiques ou différents et représentent un atome d'hydrogène ou un radical hydrocarboné ayant de 1 à 14 atomes de carbone, ou encore $R^a$ et $R^b$, avec les atomes qui les relient, peuvent former un cycle, à une température de -60 à 200°C, sous une pression de 0,5 à 100 bar, en solution, en suspension ou en phase gazeuse, en présence d'un catalyseur, qui est constitué d'un métallocène servant de composé d'un métal de transition et d'un catalyseur, auquel cas le co-catalyseur est un aluminoxane et/ou d'un composé de type sel de formule $R_xNH_{4-x}BR'_4$ ou de formule $R_3PHBR'_4$, où x vaut 1, 2 ou 3, les radicaux R, qui sont identiques ou différents, sont des groupes alkyle ou aryle, et R' est un groupe aryle, qui peut aussi être fluoré ou partiellement fluoré, caractérisé en ce que le métallocène est un composé de formule (I)

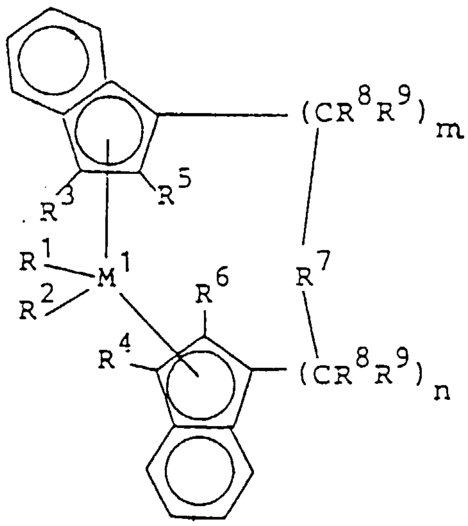

(I)

dans laquelle

$M^1$ est un métal du Groupe IVb, Vb ou VIb du Tableau Périodique,

$R^1$ et $R^2$ sont identiques ou différents et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,

$R^3$ et $R^4$ sont identiques ou différents et représentent un atome d'hydrogène, un atome d'halogène, un groupe alkyle en $C_1$-$C_{10}$ pouvant être halogéné, un groupe aryle en $C_6$-$C_{10}$, un groupe $-NR_2^{10}$, $-SR^{10}$, $-OSiR_3^{10}$, $SiR_3^{10}$ ou $-PR_2^{10}$, où $R^{10}$ est un atome d'halogène, un groupe alkyle en $C_1$-$C_{10}$ ou un groupe aryle en $C_6$-$C_{10}$,

$R^5$ et $R^6$ sont identiques ou différents et ont les significations données pour $R^3$ et $R^4$, du moment que $R^5$ et R6 ne sont pas des hydrogènes,

$R^7$ est

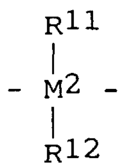 , 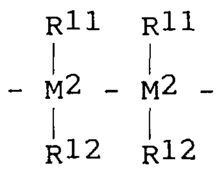 , 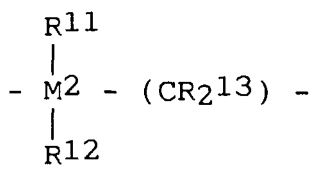 ,

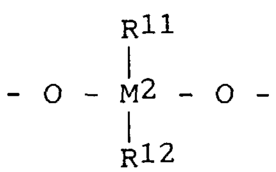 , 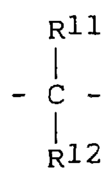 , 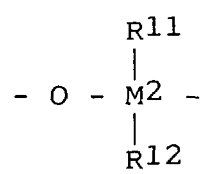 ,

$=BR^{11}$, $=AlR^{11}$, -Ge-, -Sn-, -O-, -S-, =SO, $=SO_2$, $=NR^{11}$, =CO, $=PR^{11}$ ou $=P(O)R^{11}$,

où

$R^{11}$, $R^{12}$ et $R^{13}$ sont identiques ou différents et représentent un atome d'hydrogène, un atome d'halogène, un groupe alkyle en $C_1$-$C_{10}$, un groupe fluoralkyle en $C_1$-$C_{10}$, un groupe aryle en $C_6$-$C_{10}$, un groupe fluoraryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$, ou encore $R^{11}$ et $R^{12}$, ou $R^{11}$ et $R^{13}$, forment un cycle avec les atomes qui les relient,

$M^2$ est le silicium, le germanium ou l'étain,

$R^8$ et $R^9$ sont identiques ou différents et ont les significations données pour $R^{11}$, et

m et n sont identiques ou différents et valent zéro, 1 ou 2, auquel cas m plus n vaut zéro, 1 ou 2.

**2.** Procédé selon la revendication 1, caractérisé en ce que, dans la formule (I), $M^1$ est Zr ou Hf, $R^1$ et $R^2$ sont identiques ou différents et représentent les radicaux méthyle ou chloro, $R^3$ et $R^4$ sont des hydrogènes, $R^5$ et R6 sont identiques ou différents et représentent les radicaux méthyle, éthyle ou trifluorométhyle, R7 est un radical

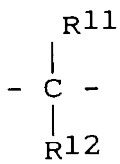 , 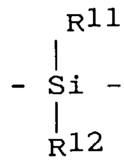

et n plus m vaut 0 ou 1.

**3.** Procédé selon la revendication 1 ou 2, caractérisé en ce que le composé de formule (I) est le dichlorure de rac-diméthylsilyl(2-méthyl-1-indényl)$_2$-zirconium, le rac-éthylène(2-méthyl-1-indényl)$_2$-zirconium-diméthyle, le rac-didméthylsilyl(2-méthyl-1-indényl)$_2$-zirconium-diméthyle, le rac-éthylène(2-méthyl-1-indényl)$_2$-zirconium-diméthyle, le dichlorure de rac-phényl(méthyl)silyl(2-méthyl-1-indényl)$_2$-zirconium, le dichlorure de rac-diphénylsilyl (2-méthyl-1-indényl)$_2$-zirconium, le dichlorure de rac-méthyléthylène(2-méthyl-1-indényl)$_2$-zirconium ou le dichlorure de rac-diméthylsilyl(2-éthyl-1-indényl)$_2$-zirconium.

**4.** Procédé selon l'une ou plusieurs des revendications 1 à 3, dans lequel le co-catalyseur est un aluminoxane de formule (II)

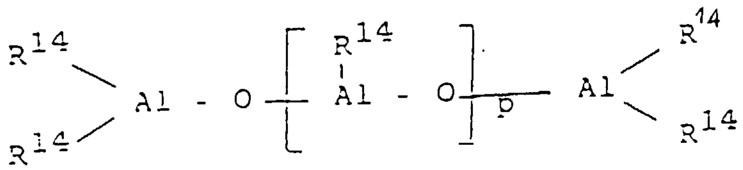

(II)

pour le type linéaire et/ou de formule III

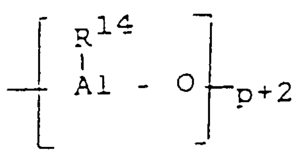

(III)

pour le type cyclique,

où, dans les formules (II) et (III), les radicaux $R^{14}$ peuvent être identiques ou différents et représentent un groupe alkyle en $C_1$-$C_6$, un groupe aryle en $C_6$-$C_{18}$ ou un hydrogène, et p est un nombre entier de 2 à 50.

**5.** Procédé selon l'une ou plusieurs des revendications 1 à 4, dans lequel le métallocène est appliqué sur un support.

**6.** Procédé selon l'une ou plusieurs des revendications 1 à 5, dans lequel le métallocène est prépolymérisé.

**7.** Utilisation d'un catalyseur qui est constitué d'un métallocène de formule (I) selon l'une ou plusieurs des revendications 1 à 3 servant de composé d'un métal de transition et d'un co-catalyseur, où le co-catalyseur est un aluminoxane et/ou d'un composé de type sel de formule $R_xNH_{4-x}BR'_4$ ou de formule $R_3PHBR'_4$, où x vaut 1, 2 ou 3, les radicaux R, qui sont identiques ou différents, sont des groupes alkyle ou aryle, et R' est un groupe aryle, qui peut aussi être fluoré ou partiellement fluoré, pour polymériser ou copolymériser une oléfine de formule $R^a$-CH=CH-$R^b$, où $R^a$ et $R^b$ sont identiques ou différents et représentent un atome d'hydrogène ou un radical hydrocarboné ayant de 1 à 14 atomes de carbone, ou encore $R^a$ et $R^b$, avec les atomes qui les relient, forment un cycle.